# EUROPEAN PATENT APPLICATION

(11) **EP 3 751 425 A1**
(43) Date of publication of application: **16.12.2020**
(21) Application number: 19747490.1
(22) Date of filing: 30.01.2019
(51) Int. Cl.: G06F 16/00

(54) **METHOD AND APPARATUS FOR VIEWING HISTORICALLY USED FILE, AND TERMINAL**

(30) Priority: 05.02.2018 CN 201810111549
(71) Applicant: TENCENT TECHNOLOGY (SHENZHEN) COMPANY LIMITED, Shenzhen, Guangdong 518057 (CN)
(72) Inventor: WANG, Hao, Shenzhen, Guangdong 518057 (CN)
(74) Representative: EP&C
(86) International application number: PCT/CN2019/073898
(87) International publication number: WO 2019/149218

(57) **Abstract**

Disclosed are a method and apparatus for viewing a historically used file, and a terminal, belonging to the field of file management. The method comprises: displaying a first user interface of a parent application program, wherein an ingress of at least one child application program is displayed on the first user interface; receiving a start signal triggered at the ingress of a target child application program; sending an information acquisition request to a server corresponding to the target child application program; receiving file information of n historically used files sent by the server; and displaying a second user interface of the target child application program, wherein the file information of the n historically used files is displayed on the second user interface. The present application achieves the effect that the function of quickly accessing a historically used file can be used on any terminal supporting a parent application program, and the terminal can use a Windows operating system or a non-Windows operating system, such as an IOS operating system or an Android operating system.

## Description

### RELATED APPLICATION

This application claims priority to Chinese Patent Application No. 201810111549.6, entitled "METHOD AND APPARATUS FOR VIEWING RECENTLY USED FILE, AND TERMINAL", filed on February 05, 2018, the disclosure of which is hereby incorporated by reference in its entirety.

### FIELD OF THE TECHNOLOGY

Embodiments of this application relate to the field of file managements, and in particular, to a method and an apparatus for viewing a previously used file, and a terminal.

### BACKGROUND OF THE DISCLOSURE

A computer device with a Windows operating system is a widely used device in daily office work. For example, a user may use the Windows operating system to process documents.

The Windows operating system provides a quick access function. The user first clicks the icon of the resource manager on the desktop task bar of the operating system, and the terminal displays a window interface of the resource manager. The user then clicks the icon of the quick access function in the window interface of the resource manager, and the terminal displays the 10 most frequently used folders of the user and the 20 most recently used files in the window interface of the resource manager. The 20 files include different types of files such as documents, pictures, and movies, etc.

Since the quick access function is provided by the Windows operating system, users may use this function on only a terminal using the Window operating system.

### SUMMARY

This application provides a method and an apparatus for viewing a previously used file, and a terminal, to resolve a problem that a quick access function can be used on only a terminal using a Window operating system. The technical solutions are as follows:

According to an aspect of this application, a method for viewing a previously used file is provided, the method being applied to a second terminal and including:
displaying a first user interface of a parent application, an entry to at least one sub-application being displayed on the first user interface, and the sub-application running by relying on the parent application;
receiving a start signal triggered at an entry to a target sub-application, the target sub-application being one of the at least one sub-application;
transmitting an information obtaining request to a server corresponding to the target sub-application;
receiving file information of n previously used files from the server; and
displaying a second user interface of the target sub-application, the file information of the n previously used files being displayed on the second user interface;
the n previously used files being previously used by another terminal and uploaded by the another terminal to the server, and n being a positive integer.

According to another aspect of this application, an apparatus for viewing a previously used file is provided, the apparatus being implemented in a second terminal and including:
a display module, configured to display a first user interface of a parent application, an entry to at least one sub-application being displayed on the first user interface, and the sub-application running by relying on the parent application;
an interaction module, configured to receive a start signal triggered at an entry to a target sub-application, the target sub-application being one of the at least one sub-application;
a transmitting module, configured to transmit an information obtaining request to a server corresponding to the target sub-application; and
a receiving module, configured to receive file information of n previously used files from the server;
the display module being further configured to display a second user interface of the target sub-application, the file information of the n previously used files being displayed on the second user interface; and
the n previously used files being previously used by another terminal and uploaded by the another terminal to the server, and n being a positive integer.

According to still another aspect of this application, a terminal is provided, the terminal including: a processor and a memory that stores at least one instruction, at least one program, a code set, or an instruction set, the at least one instruction, the at least one program, the code set, or the instruction set being loaded and executed by the processor to perform the foregoing method for viewing a previously used file.

According to yet another aspect of this application, a computer readable storage medium is provided, the computer readable storage medium storing at least one instruction, at least one program, a code set, or an instruction set, the at least one instruction, the at least one program, the code set, or the instruction set being loaded and executed by a processor to perform the foregoing method for viewing a previously used file.

According to still yet another aspect of this application, a computer program product is provided, the computer program product storing at least one instruction, at least one program, a code set, or an instruction set, the at least one instruction, the at least one program, the code set, or the instruction set being loaded and executed by a processor to perform the foregoing method for viewing a previously used file.

Beneficial effects brought by the technical solutions provided in the embodiments of this application can include at least the following.

A target sub-application is provided in the parent application, and a previously used file previously used by a user on another terminal is obtained and displayed through the target sub-application. The problem that a user can quickly access a previously used file on only the terminal using the Windows operating system is resolved. Previously used files can be quickly accessed on any terminal that supports a parent application. The terminal may use a Windows operating system or a non-Windows operating system, such as an IOS operating system or an Android operating system.

### BRIEF DESCRIPTION OF THE DRAWINGS

To describe the technical solutions in the embodiments of this application more clearly, the following briefly describes the accompanying drawings required for describing the embodiments. Apparently, the accompanying drawings in the following description show merely some embodiments of this application, and a person of ordinary skill in the art may still derive other drawings from these accompanying drawings without creative efforts.
FIG. 1 is a structural block diagram of a computer system according to an exemplary embodiment of this application.
FIG. 2 is a structural block diagram of a computer system according to another exemplary embodiment of this application.
FIG. 3 is a structural block diagram of a second terminal according to still another exemplary embodiment of this application.
FIG. 4 is a flowchart of a method for viewing a previously used file according to an exemplary embodiment of this application.
FIG. 5 is a schematic diagram of an interface during an exemplary implementation of the method for managing a previously used file according to the embodiment of FIG. 4.
FIG. 6 is a flowchart of a method for viewing a previously used file according to an exemplary embodiment of this application.
FIG. 7 is a flowchart of a method for viewing a previously used file according to an exemplary embodiment of this application.
FIG. 8 is a schematic diagram of an interface during exemplary implementation of the method for viewing a previously used file according to the embodiment of FIG. 7.
FIG. 9 is a schematic diagram of an interface during exemplary implementation of the method for viewing a previously used file according to the embodiment of FIG. 7.
FIG. 10 is a flowchart of sub-steps of a method for viewing a previously used file according to an exemplary embodiment of this application.
FIG. 11 is a flowchart of sub-steps of a method for viewing a previously used file according to an exemplary embodiment of this application.
FIG. 12 is a flowchart of sub-steps of a method for viewing a previously used file according to an exemplary embodiment of this application.
FIG. 13 is a flowchart of sub-steps of a method for viewing a previously used file according to an exemplary embodiment of this application.
FIG. 14 is a flowchart of sub-steps of a method for viewing a previously used file according to an exemplary embodiment of this application.
FIG. 15 is a block diagram of an apparatus for viewing a previously used file according to an exemplary embodiment of this application.
FIG. 16 is a block diagram of a terminal according to an exemplary embodiment of this application.

### DESCRIPTION OF EMBODIMENTS

To make objectives, technical solutions, and advantages of this application clearer, the following further describes in detail implementations of this application with reference to the accompanying drawings.

Terms used in this application are first explained.
Process: A corresponding entity of an application during running in an operating system.
Desktop: A name of a first user interface of a graphical user interface system in an operating system (OS for short) after the graphical user interface system starts. The desktop is mainly configured to store application icons, file icons, and/or folder icons.
Shortcut: A file format without a file entity used for linking to (or aiming at) another file (also referred to as a source file). A storage path corresponding to the shortcut may be different from a storage path of the source file.
File: A general term for applications, files, or folders.
Recently used directory: A storage directory for the operating system to cache shortcuts to files previously used by users according to an order in which the users use the files. When the operating system is a Windows operating system, the recently used directory is a Recent directory in a system disk. The Recent directory is a folder with a storage path of %appdata%\Microsoft\Windows\Recent.
System API interface: A set of functional function interfaces provided by the operating system and used for data exchange or functional cooperation interaction with the operating system.

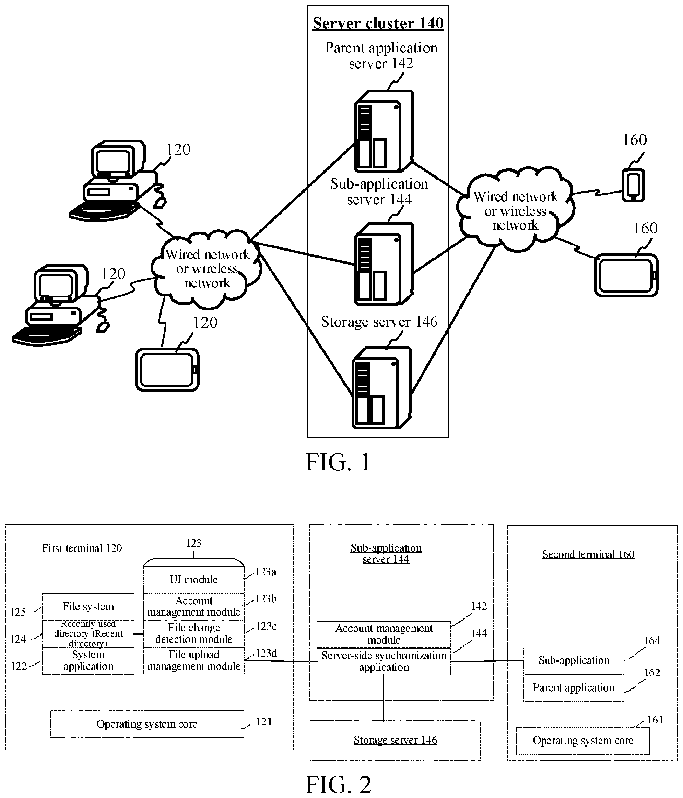

FIG. 1 is a structural block diagram of a computer system 100 according to an exemplary embodiment of this application. The computer system 100 includes: one or more first terminals 120, a server cluster 140, and one or more second terminals 160.

The first terminal 120 may be a mobile phone, a tablet computer, an e-book reader, a Moving Picture Experts Group Audio Layer III (MP3) player, a Moving Picture Experts Group Audio Layer IV (MP4) player, a laptop, a desktop computer, etc. An operating system of the first terminal 120 has a quick access function for recently used documents. The operating system provides a recently used directory. For example, the operating system may be a Windows system.

A preset application provided by a third party may be installed on the first terminal 120. Optionally, the preset application is any of an instant communication application, a social application, a payment application, an electronic shopping application, a system management application, a security management application, an antivirus application, a network disk application, a file manager application, and a desktop optimization application. In this specification, for example, the preset application is a system management application. The system management application is used for managing and enhancing the operating system. The system management application can include at least one of the following functions: cloud killing Trojans, system acceleration, bug fixes, real-time protection, network speed protection, computer clinics, health assistants, desktop sorting, and document protection.

The preset application may have an account login function. A user may register and log into an account of the user in the preset application. The account may be an account registered in the preset application, or an account registered in another application (such as an instant messaging application) but authorized to be shared in the preset application.

The first terminal 120 is connected to the server cluster 140 through a wired network or a wireless network.

The second terminal 160 may be a mobile phone, a tablet computer, an e-book reader, an MP3 player, an MP4 player, a laptop, a desktop computer, etc. The operating system of the second terminal 160 may be a Windows system, an Android system, or an IOS system.

A parent application and a sub-application are installed and run on the second terminal 160. The parent application may be any of an instant communication application, a social application, a payment application, an electronic shopping application, a system management application, a security management application, an antivirus application, a network disk application, a file manager application, and a desktop optimization application. The parent application in the second terminal 160 and the preset application in the first terminal 120 may be the same type of application or may be different types of applications. In this specification, the second terminal 160 can include an instant messaging application. The sub-application runs by relying on the parent application, and may be further referred to as an "applet". Optionally, the sub-application and the preset application in the first terminal 120 are provided by the same server.

The server cluster 140 may be any of a plurality of servers, a virtual cloud storage, or a cloud computing center. The server cluster 140 is configured to provide background services for the preset application in the first terminal 120, and the parent application and the sub-application in the second terminal 160. The server cluster 140 has a data storage capability. Optionally, the server cluster 140 includes: a parent application server 142, a sub-application server 144, and a storage server 146.

The parent application server 142 is configured to provide a background service for the parent application in the second terminal 160. For example, when the parent application is an instant messaging application, the parent application server 142 provides an instant messaging service to a plurality of second terminals 160.

The sub-application server 144 is configured to provide background services for the preset application in the first terminal 120 and the sub-application in the second terminal 160. For example, the sub-application server 144 provides upload and download services related to previously used files and account management services.

The storage server 146 is configured to provide an online storage service for previously used files.

In this embodiment, for example, the server cluster 140 includes three servers. However, the server cluster 140 may include more or less than three servers. For example, the server cluster 140 is implemented by a plurality of virtual machines on one server, or implemented by dozens of servers. This is not limited in this embodiment.

FIG. 2 is a structural block diagram of a computer system 100 according to another exemplary embodiment of this application. With reference to FIG. 1, the computer system 100 includes: a first terminal 120, a server cluster 140, and a second terminal 160. In this embodiment, for example, the first terminal 120 is a terminal in which the operating system provides a recently used directory.

The first terminal 120 includes an operating system 121, a system application 122, a preset application 123, a recently used directory 124, and a file system 125.

The operating system 121 is basic software that provides secure access to computer hardware for applications. The system application 122 is used for providing system services. There may be one or more system applications 122. For example, there is a system application 122 used for maintaining the recently used directory 124 based on file usage of users.

The recently used directory 124 is used to store file information of a previously used file of the user. For example, the operating system is the Windows operating system. The recently used directory is a Recent directory, and the recently used directory stores shortcuts to various files used recently by the user.

The file system 125 is a file resource manager deployed on one or more disks. The file system 125 includes file storage paths distributed on a plurality of disks. After a user creates, accesses, or modifies a file in the file system 125, corresponding data is generated in the recently used directory 124.

The preset application 123 is usually provided by a third party. The preset application 123 includes: a user interface (UI) module 123a, an account management module 123b, a file change detection module 123c, and a file upload management module 123d.

The UI module 123a is configured to display the user interface of the preset application 123. The user interface includes a quick access floating window. The quick access floating window is configured to display quick file information of the previously used files. The account management module 123b is configured to register and/or log into an account of the user. The file change detection module 123c is configured to monitor a file change in the recently used directory 124, and then generate and maintain a recent file queue. The file upload management module 123d is configured to generate a file upload queue and upload files in the file upload queue when the file in the recent file queue changes. The file upload management module 123d is configured to synchronize the previously used files used by the user on the first terminal 120 with the sub-application server 144.

The first terminal 120 is connected to the sub-application server 144 through a wireless network and/or a wired network.

The sub-application server 144 includes an account management module 142 and a server-side synchronization application 144.

The account management module 142 is configured to manage a second user account used by a user on the first terminal 120 and the first user account used by the user on the second terminal 140, and provide at least one of a registration service, a generation service, a login service, and a binding service of a related account. The binding service may be a service to bind the first user account and the second user account of the same user.

The server-side synchronization application 141 is configured to synchronize previously used files used by the same user between the first terminal 120 and the second terminal 160.

The storage server 146 is configured to store a previously used file of each user. Optionally, the storage server 146 associates a second user account with a previously used file for each user for storage. The storage server 146 adopts at least one of the following storage manners: a database, a hybrid table (cross-mixing or hybrid storage of data of a plurality of users), and a logical network disk, etc. An implementation of the storage server 146 is not limited in this application.

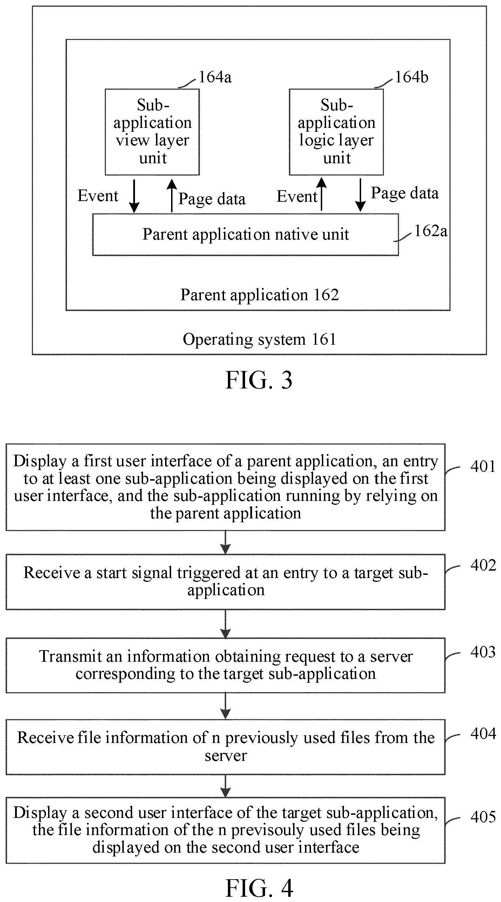

The second terminal 160 includes an operating system 161, a parent application 162, and a sub-application 164. With reference to FIG. 3, the operating system 161 and the parent application 162 are run on the second terminal 160. The parent application 162 provides an environment for the sub-application 164 to run. The second terminal 160 may create, according to a program package of the sub-application 164, a sub-application logic layer unit 164b and a corresponding sub-application view layer unit 164a for implementing the sub-application 164. The sub-application logic layer unit 164b may be configured to execute a page logic code in the program package. The sub-application view layer unit 164a may be configured to execute a page structure code in the program package, and may further execute a page style code in the program package. The page logic code, the page structure code, and the page style code in the program package may be collectively referred to as page codes.

The operating system 161 is a computer program that manages and controls hardware and software resources in the second terminal 160, and is the most basic system software that directly runs on the bare second terminal 160. An application needs to run under support of the operating system 161. The operating system 161 may be a desktop operating system such as a Windows operating system or a Linux operating system or an Apple desktop operating system (Mac OS), or a mobile operating system such as an Apple mobile terminal operating system (iOS) or an Android operating system.

The parent application 162 carries the sub-application 164 and provides an environment for the sub-application 164 to be implemented. The parent application 162 is a native application. The native application may directly run on the operating system 161. The parent application 162 may be a social application, a dedicated application that specifically supports the sub-application 162, a file management application, a mail application, or a game application, etc. The social application includes an instant messaging application, a social network service (SNS) application, or a live broadcast application, etc. The sub-application 164 may run in the environment provided by the parent application. The sub-application 164 may be specifically a social application, a file management application, a mail application, or a game application, etc. The parent application 162 may be specifically WeChat, and the corresponding sub-application 164 may be referred to as an applet.

The sub-application logic layer unit 164b and the corresponding sub-application view layer unit 164a are configured to implement a sub-application instance. One sub-application 164 may be implemented by one sub-application logic layer unit 164b and at least one sub-application view layer unit 164a. The sub-application view layer unit 164a may be in a one-to-one correspondence with a sub-application page.

The sub-application view layer unit 164a is configured to organize and render views of the sub-application. The sub-application logic layer unit 164b is configured to process data processing logic of the sub-application 164 and a corresponding sub-application page. The unit may be specifically a process or a thread. The sub-application view layer unit 164a is, for example, a sub-application view layer thread, and the sub-application logic layer unit 164b is, for example, a sub-application logic layer thread. The sub-application logic layer unit 164b may run in a virtual machine. The sub-application view layer unit 164a and the sub-application logic layer unit 164b may relay communication through a parent application native unit 162a. The parent application native unit 162a is an interface for the parent application 162 to communicate with the sub-application 164. The parent application native unit 162a may be a thread or process of the parent application 162. Page logic code of each sub-application page belonging to the program package may be registered by the sub-application logic layer unit 164b during startup, and the registered page logic code is executed when the page logic code is required to process data.

FIG. 4 is a flowchart of a method for viewing a previously used file according to an exemplary embodiment of this application. This embodiment is exemplified by applying the method to the second terminal in FIG. 1, FIG. 2, or FIG. 3. The method can include the following steps.

In step 401: a first user interface of a parent application is displayed, an entry to at least one sub-application being displayed on the first user interface, and the sub-application running by relying on the parent application.

Optionally, the parent application runs on the second terminal. Optionally, the sub-application is developed based on the HyperText Markup Language 5 (HTML5). The entry to the sub-application may be an icon of the sub-application.

Optionally, the first user interface is a user interface in the parent application corresponding to the sub-application, or the first user interface is a user interface displayed after a home page user interface in the parent application is pulled down.

In step 402: a start signal triggered at an entry to a target sub-application is received.

Optionally, the start signal is a signal triggered when a tap operation is performed on the entry to the target application. The target sub-application is one of the at least one sub-application displayed on the first user interface.

Step 403: an information obtaining request is transmitted to a server corresponding to the target sub-application.

This information obtaining request is used for requesting file information of a previously used file.

In step 404: file information of n previously used files transmitted by the server is revived.

The n previously used files are previously used by another terminal and uploaded by the another terminal to the server, and n is a positive integer. The another terminal may be the first terminal in FIG. 1 or FIG. 2. The previously used files are the n files previously used by the user. Optionally, the n previously used files are n files sorted in descending order of use time.

In step 405: a second user interface of the target sub-application is displayed; the file information of the n previously used files being displayed on the second user interface.

Optionally, the first terminal and the second terminal adopt different operating systems. The operating system of the first terminal provides a recently used directory, and the operating system of the second terminal does not provide a recently used directory. The above n previously used files are uploaded by the first terminal to the server according to the recently used directory.

Optionally, a preset application is installed on the first terminal, and the preset application has a type different from a type of the parent application. The above n previously used files are uploaded by the preset application in the first terminal to the server according to the recently used directory.

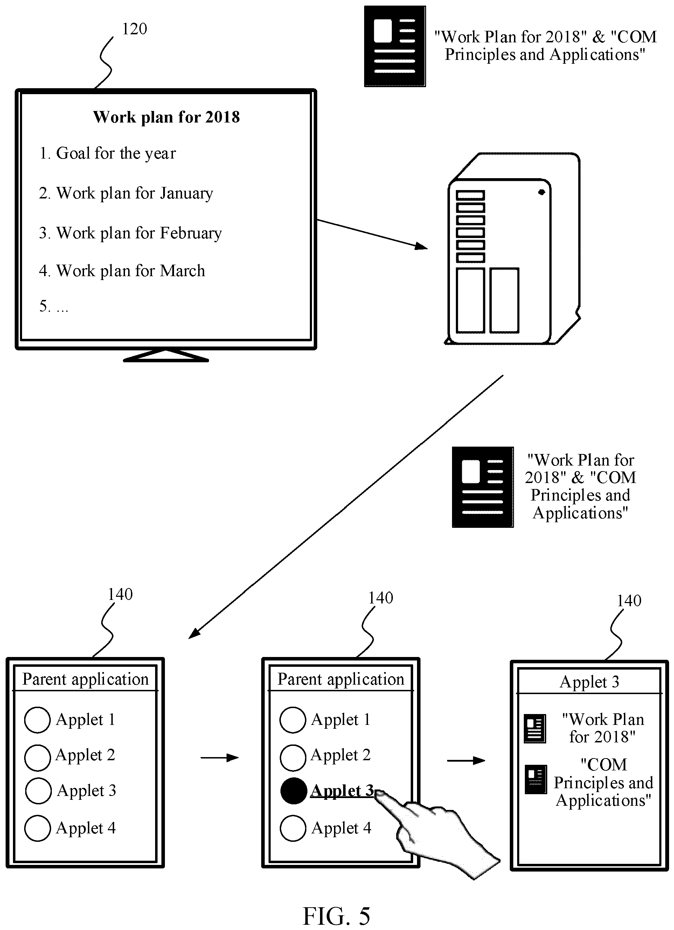

Referring to FIG. 5 schematically, a user creates and edits documents "Work Plan for 2018 " and "COM Principles and Applications" on the first terminal 120, and the first terminal 120 uploads the documents "Work Plan for 2018 " and "COM Principles and Applications" to the server. After the user starts the parent application on the second terminal 140, a first user interface of the parent application is displayed on the second terminal 140, and the first user interface displays entries to four sub-application: an entry to an applet 1, an entry to an applet 2, an entry to an applet 3, and an entry to an applet 4. When the user taps the entry to the applet 3, the second terminal 140 displays a second user interface of the applet 3, and the second user interface displays the file information of the n previously used files.

In summary, in the method provided in this embodiment, a target sub-application is provided in the parent application, and a previously used file previously used by a user on another terminal is obtained and displayed through the target sub-application. The problem that a user can quickly access a previously used file on only the terminal using the Windows operating system is resolved. Previously used files can be quickly accessed on any terminal that supports a parent application. The terminal may use a non-Windows operating system, such as an IOS operating system or an Android operating system.

Since the same user may have a plurality of terminals: office computers, home computers, tablet computers, and mobile phones, etc., the method provided in this embodiment of this application may be used for synchronizing previously used files between at least two terminals. Any two of the at least two terminals may be terminals of the same type or terminals of different types. Optionally, operating systems of one or more terminals in the at least two terminals support the recently used directory. For example, the operating system of at least one terminal is a Windows operating system.

For example, the first terminal is the office computer of the user, and the second terminal is the mobile phone or the tablet computer of the user.

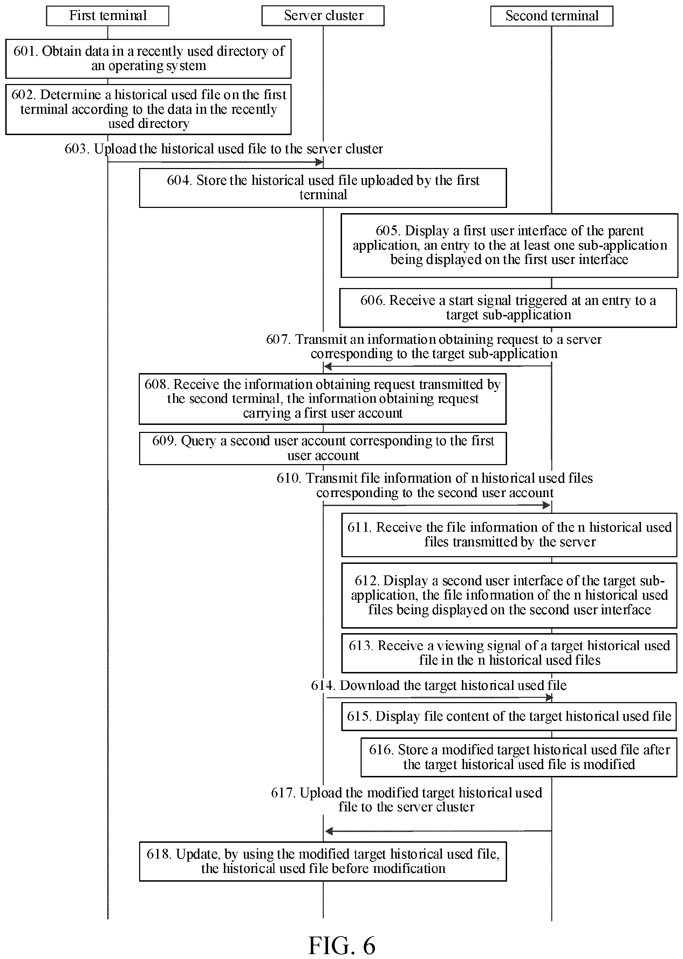

FIG. 6 is a flowchart of a method for viewing a previously used file according to an exemplary embodiment of this application. This embodiment is exemplified by applying the method to the computer system in FIG. 1 or FIG. 2. The method can include the following steps.

In step 601: The first terminal obtains data in the recently used directory of the operating system.

The recently used directory is used by the operating system to record data of historical used files in descending order of use time. In an example of the Windows system, the recently used directory is the Recent directory.

Since actual storage paths of the historical used files may be scattered at different storage locations, shortcuts to the historical used files are stored in the Recent directory, instead of using the historical used files.

Addition, deletion, modification, and renaming of shortcuts in the Recent directory are maintained by the Windows operating system. The preset application may read changed information of shortcuts to all recently used items in the Recent directory through the API interface provided by the operating system.

Optionally, after the preset application is started, the preset application reads all shortcuts in the Recent directory in an enumeration manner. The preset application may further start a thread, and obtain, through the thread, information about at least one of the following operations: addition, deletion, modification, and renaming of shortcuts in the recently used directory.

With reference to FIG. 5, it is assumed that there are shortcuts to the two documents "Work Plan for 2018" and "COM Principles and Applications" in the Recent directory, and a computer keeper application in the office computer 120 obtains the shortcuts in the Recent directory.

Step 602: The first terminal determines the historical used file on the first terminal according to the data in the recently used directory.

The preset application monitors the Recent directory in the operating system.

The preset application parses the shortcuts in the Recent directory to obtain source file information corresponding to the shortcuts. Optionally, the source file information includes: at least one of a file storage path, a file type, a file name, and a file size.

The preset application determines a previously used file (e.g., recently or historical used file) of the target account on the first terminal according to the source file information corresponding to the shortcuts. Optionally, the preset application determines m previously used files used by using the target account on the first terminal.

With reference to FIG. 5, the computer keeper application determines that the historical used files used by the user in the office computer 120 include "Work Plan for 2018" and "COM Principles and Applications".

In step 603: the first terminal uploads the historical used file to the server cluster.

The first terminal uploads a plurality of historical used files to the server cluster. The historical used file includes file data and a use time. The use time includes: one of a creation time, an access time, and a modification time closest to a current time.

In a possible implementation, if the current upload is the first upload, the first terminal uploads the m historical used files to the server cluster through full uploading. If the current upload is an i^{th} upload, and i≥2, the first terminal uploads the m historical used files to the server cluster through incremental uploading, that is, only a newly added historical used file, a newly accessed historical used file, or a newly modified historical used file is uploaded to the server through incremental uploading.

The first terminal transmits an upload request to the server cluster. The upload request includes: the second user account, the file data of the historical used file, and the use time of the historical used file. The second user account may be a unique identifier generated according to a globally unique identifier (GUID) of the first terminal. Generally, the GUID of the first terminal is calculated based on a media access control (MAC) address of the first terminal. After the first terminal transmits the GUID to the server cluster, the server cluster generates the second user account UID of the first terminal according to the GUID. The second user account may also be an account that is logged by the user in the preset application. This is not limited in this embodiment of this application.

With reference to FIG. 5, the computer keeper application on the first terminal 120 uploads the historical used files "Work Plan for 2018" and "COM Principles and Applications" to server storage space corresponding to the second user account. The server storage space corresponding to the second user account may be located in the storage server 146.

In step 604: The server cluster stores the historical used file uploaded by the first terminal.

After receiving the second user account and the n historical used files, the sub-application server stores the second user account and the n historical used files in the storage server 146.

In step 605: the second terminal displays the first user interface of the parent application, the entry to the at least one sub-application being displayed on the first user interface.

The user starts the parent application on the mobile phone or the tablet computer. The parent application provides a plurality of application functions. The application functions correspond to respective user interfaces.

The user triggers a sub-application function in the parent application. After receiving the trigger signal, the parent application displays the first user interface. The entry to the at least one sub-application is displayed on the first user interface.

Optionally, the trigger signal is a pull-down signal triggered on a homepage of the parent application, or the trigger signal is a tap signal triggered on a sub-application list item provided by the parent application. In this embodiment of this application, a specific form of the trigger signal is not limited.

Optionally, the entry to the sub-application is any of the following controls: an icon, a list item, a text that may be tapped, and a button that may be tapped, etc.

Optionally, any two sub-applications have different application functions. There is a sub-application corresponding to the preset application in the first terminal (or a document carrying function in the preset application).

With reference to FIG. 5, the second terminal 160 displays icons of one or more sub-applications on the first user interface of the parent application, for example, an icon of the applet 1, an icon of the applet 2, an icon of the applet 3, and an icon of the applet 4.

In step 606: the second terminal receives the start signal triggered at the entry to the target sub-application.

The target sub-application is corresponding to the preset application in the first terminal (or a document carrying function in the preset application). The target sub-application provides a synchronization function for the recently used d files on the second terminal. The target sub-application is one of the at least one sub-application.

When a user wants to use the target sub-application, the start signal is triggered on the entry to the target sub-application. The start signal may be a signal to tap the icon of the target sub-application. The parent application receives the start signal.

In step 607: The second terminal transmits the information obtaining request to the server corresponding to the target sub-application.

When receiving the start signal, the second terminal transmits the information obtaining request to the server corresponding to the target sub-application through the target sub-application. Alternatively, after receiving the start signal, the second terminal transmits the information obtaining request to the server corresponding to the target sub-application through the target sub-application every preset time interval. Illustratively, the server corresponding to the target sub-application is the sub-application server 144 in FIG. 1 or FIG. 2.

Optionally, the information obtaining request is used for requesting file information of the previously used file from the server.

Optionally, the information obtaining request carries the first user account that is logged into the parent application. For example, the parent application is WeChat, and the first user account is an openID of the user in WeChat.

In step 608: the server cluster receives the information obtaining request transmitted by the second terminal, the information obtaining request carrying the first user account.

Optionally, the sub-application server receives the information obtaining request transmitted by the second terminal, and extracts the first user account from the information obtaining request.

In step 609: The server cluster queries a second user account corresponding to the first user account.

Optionally, the second user account is an account corresponding to the first terminal in the server cluster.

The sub-application server stores a binding relationship between the first user account and the second user account. After receiving the information obtaining request, the sub-application queries, in the binding relationship, the second user account corresponding to the first user account.

In addition, the sub-application server further obtains the file information of the n historical used files corresponding to the second user account from the storage server.

In step 610: the server cluster transmits, to the second terminal, the file information of the n historical used files corresponding to the second user account.

Optionally, n is a preset value, for example, 5, 10, or 15. When there are actually less than n historical used files, only the actual historical used files can be obtained.

The file information includes a file name, and may further include at least one of a file type, a use time, a preview image, or a thumbnail.

In step 611: the second terminal receives the file information of the n historical used files transmitted by the server.

The target sub-application receives the file information of the n historical used files transmitted by the server.

In step 612: The second terminal displays the second user interface of the target sub-application, the file information of the n historical used files being displayed on the second user interface.

The second terminal displays the second user interface of the target sub-application based on the file information of the n historical used files. The file information of the n historical used files is displayed on the second user interface.

The second user interface may display the file information of the n historical used files by using a list control. The list control includes n list items, each list item corresponding to one historical used file. Optionally, the n list items are arranged in descending order of use time.

Optionally, when the list item is tapped, the user interface corresponding to the historical used file may be quickly started or invoked. The file information includes at least one of a file identifier, a file name, a file type, and a use time.

In step 613: the second terminal receives a viewing signal of a target historical used file in the n historical used files.

The viewing signal may be any of a tap signal, a double-tap signal, a touch and hold signal, or a slide signal. For example, the user may tap any of the n historical used files, the tapped historical used file being the target historical used file.

In step 614: the second terminal downloads the target historical used file.

The second terminal may download file data of the target historical used file from the server cluster. Optionally, after receiving the viewing signal, the second terminal downloads the target historical used file. Alternatively, before receiving the viewing signal, the second terminal downloads and caches the target historical used file in advance.

In step 615: the second terminal displays file content of the target historical used file.

The second terminal displays the file content of the target historical used file through the sub-application. Optionally, when the sub-application has the ability to open the target historical used file, the sub-application displays the file content of the target historical used file. When the sub-application does not have the ability to open the target historical used file, the sub-application invokes another application to display the file content of the target historical used file. Other applications have the ability to open the target historical used file, or other applications are associated with the file type of the target historical used file.

The user may preview or view the file content of the target historical used file on the second terminal.

In step 616: The second terminal stores a modified target historical used file after the target historical used file is modified.

Optionally, the user further edits and modifies the target historical used file on the second terminal. After the target historical used file is modified, the sub-application stores the modified target historical used file.

In step 617: the second terminal uploads the modified target historical used file to the server cluster.

The sub-application uploads the modified target historical used file to the server cluster.

In step 618: The server cluster updates, by using the modified target historical used file, the historical used file before modification.

When the user uses another terminal (the first terminal or the second terminal) to access the server cluster again, the modified target historical used file may be synchronized locally to be viewed or edited again.

In summary, in the method provided in this embodiment, a target sub-application is provided in the parent application, and a previously used file (e.g., recently or historical used file) previously used by a user on another terminal is obtained and displayed through the target sub-application. The problem that a user can quickly access a previously used file on only the terminal using the Windows operating system is resolved. Previously used files can be quickly accessed on any terminal that supports a parent application. The terminal may use a non-Windows operating system, such as an IOS operating system or an Android operating system.

In the method provided in this embodiment, the server cluster further stores the binding relationship between the first user account and the second user account, so that the first terminal can upload the recent used file by using the second user account, and the second terminal can obtain the previously used file by using the first user account, thereby implementing previously used file synchronization among terminals (or different types of applications) when the preset application on the first terminal is different from the parent application on the second terminal.

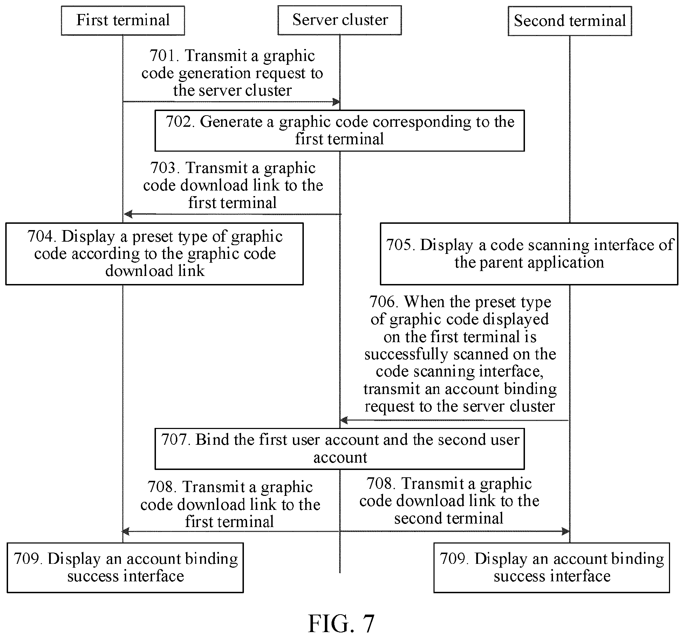

In an optional embodiment based on FIG. 6, since the binding relationship between the first user account and the second user account is stored in the server cluster, the second terminal may implement account binding through code scanning. In other words, before step 605, the method further includes the following steps shown in FIG. 7.

In step 701: the first terminal transmits a graphic code generation request to the server cluster.

The graphic code generation request is used for requesting the server cluster to generate a preset type of graphic code. Optionally, the preset type of graphic code is a QR code for binding.

Optionally, the preset application in the first terminal transmits the graphic code generation request to the sub-application server, the graphic code generation request carrying the GUID of the first terminal. Alternatively, the graphic code generation request carries the second user account.

Correspondingly, the sub-application server receives the graphic code generation request transmitted by the first terminal.

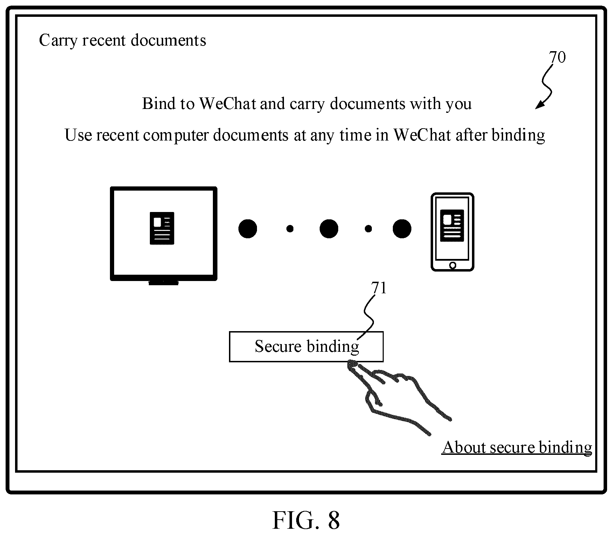

Referring to FIG. 8 schematically, when the user wants to use the parent application to view the previously used files, the first terminal displays a user interface 80 prompting the user to perform binding. The user interface 80 is configured to guide the user to bind the second user account of the preset application and the first user account in the parent application. After the user taps a binding button 81 in the user interface 80, the first terminal transmits the graphic code generation request to the server cluster.

In step 702: the server cluster generates a graphic code corresponding to the first terminal.

The sub-application server generates a preset type of graphic code corresponding to the first terminal. Optionally, the preset type of graphic code carries the second user account. Optionally, the preset type of graphic code further carries a link to the sub-application.

Optionally, when the graphic code generation request carries the GUID of the first terminal, the sub-application server first generates a second user account UID based on the GUID, and then generates a QR code based on the second user account. When the graphic code generation request carries the second user account UID, the sub-application server generates a QR code according to the second user account UID.

In step 703: The server cluster transmits a graphic code download link to the first terminal.

The sub-application server stores the graphic code to a preset storage location, for example, the preset storage location is a preset cache address, and then transmits the graphic code download link to the first terminal.

In step 704: the first terminal displays the preset type of graphic code according to the graphic code download link.

After receiving the graphic code download link, the preset application downloads the preset type of graphic code from the graphic code download link. The preset application displays the preset type of graphic code in the user interface.

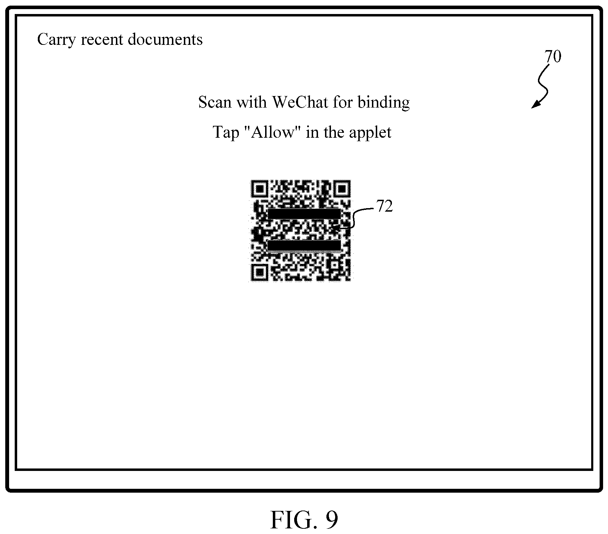

Referring to FIG. 9, the first terminal displays a downloaded QR code 82 in the user interface 80.

In step 705: the second terminal displays a code scanning interface of the parent application.

The code scanning interface is provided in the parent application, and the code scanning interface is a user interface configured to scan a graphical code.

The user starts the code scanning interface in the parent application. The second terminal displays the code scanning interface of the parent application to scan the preset type of graphic code that is being displayed by the first terminal.

In step 706: when successfully scanning, in the code scanning interface, the preset type of graphic code displayed on the first terminal, the second terminal transmits an account binding request to the server cluster.

When the preset type of graphic code displayed on the first terminal is successfully scanned on the code scanning interface, the parent application obtains links to the second user account and the sub-application from the graphic code.

If the sub-application already exists in the parent application, the parent application delivers the second user account to the sub-application. If the sub-application is not installed in the parent application, the parent application obtains the sub-application according to the link to the sub-application, and delivers the second user account to the sub-application.

The sub-application obtains the second user account in the graphic code, obtains the first user account that is logged into the parent application, and transmits the account binding request to the sub-application server. The account binding request carries the first user account and the second user account. Correspondingly, the sub-application server receives the account binding request.

In step 707: the server cluster binds the first user account and the second user account.

After receiving the account binding request, the sub-application server associates the first user account with the second user account for storage.

In step 708: the server cluster transmits a binding success notification to the first terminal and/or the second terminal.

Correspondingly, the first terminal and/or the second terminal receive/receives the binding success notification.

In step 709: the first terminal and/or the second terminal display/displays an account binding success interface.

The first terminal displays the account binding success interface according to the binding success notification.

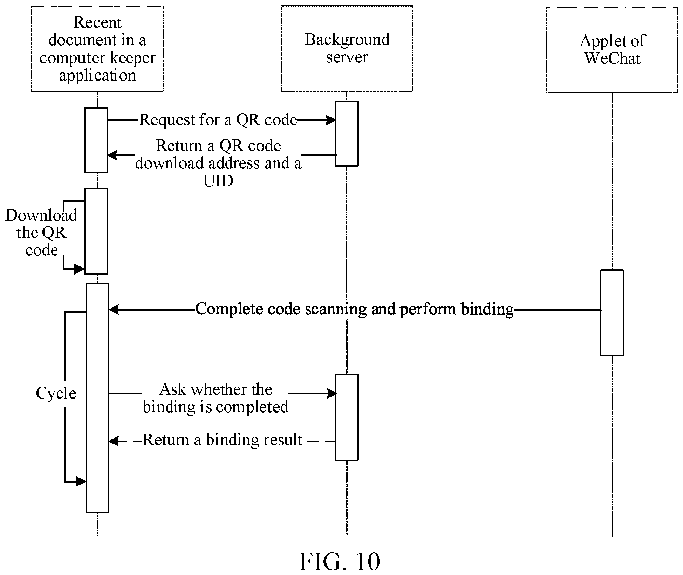

In an optional example, the preset application is a computer keeper application with a recent document function, and the sub-application is an applet in WeChat. The above binding process shown in FIG. 7 is specifically shown in FIG. 10. The recent document function in the computer keeper application communicates with the background server through a CS protocol, and requests the background server for a QR code, and the background server returns a download address and a UID of the QR code to the computer keeper application. After downloading the QR code, the computer keeper application displays the QR code in the user interface, and a worker thread is started to continuously ask the background server whether the UID is bound through WeChat. After the user scans the code through WeChat on the mobile phone and performs binding successfully, the background server sets, to a bound state, a status corresponding to the UID, so that when the computer keeper application asks whether a computer represented by the UID is bound, the background server notifies, through a network package, that the UID is successfully bound, and the computer keeper application terminates the worker thread, and switches the user interface to a binding success interface, thereby completing the binding process.

In summary, in the method provided in this embodiment, the second terminal establishes the binding relationship between the first user account and the second user account by scanning the code, reducing operation difficulty when the user establishes account binding relationships among different applications, and improving human-computer interaction efficiency for users.

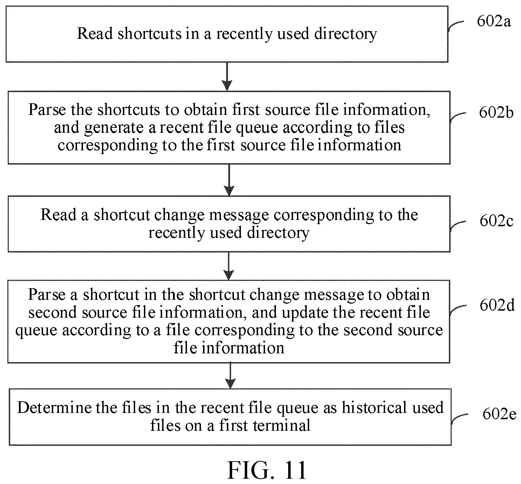

In an optional embodiment, the preset application determines the previously used file by monitoring the Recent directory. Step 602 may include the following steps 602a to 602e, which are shown in FIG. 11.

In step 602a: the shortcuts in the recently used directory are read.

The preset application starts a thread. The thread monitors the Recent directory through the API interface provided by the operating system. The API interface may be a ReadDirectoryChanges function, and the API interface may monitor modification, renaming, deletion, and creation of shortcuts in the Recent directory.

Since actual storage paths of the previously used files may be scattered at different storage locations, shortcuts to the previously used files are stored in the Recent directory, instead of using the previously used files. When a user creates, opens, modifies, and deletes a file, the shortcuts in the Recent directory also change accordingly.

The preset application reads the shortcuts in the Recent directory. Referring to FIG. 11 schematically, the file change detection module in the preset application reads (81) the shortcuts in the Recent directory to obtain the shortcuts in the Recent directory.

In step 602b: the shortcuts are parsed to obtain first source file information. A recent file queue is generated according to files corresponding to the first source file information.

The file change detection module parses the shortcuts in the Recent directory to obtain the first source file information. The previously used files correspond to respective first source file information. The first source file information includes: at least one of a file name, a file type, a file storage path, a file size, and a use time.

The file change detection module reads the m previously used files and stores the previously used files in the recent file queue based on the first source file information.

Optionally, the file change detection module filters the first source file information according to a preset white list. The whitelist list may include: at least one of a first whitelist list for retaining documents, a second whitelist list for retaining multimedia files, and a third whitelist list for retaining programming-related files.

Optionally, the file change detection module determines whether a file type in each piece of source file information belongs to the white list. When the file type belongs to the white list, the file change detection module stores file data corresponding to the file name in the recent file queue according to a file storage path, which is shown in step 82 in FIG. 11. For example, the file change detection module stores files with file types of doc, xlsx, ppt to the recent file queue.

Optionally, m previously used files are stored in the recent file queue, and previously used files other than the m previously used files are discarded.

In step 602c: a shortcut change message corresponding to the recently used directory is read.

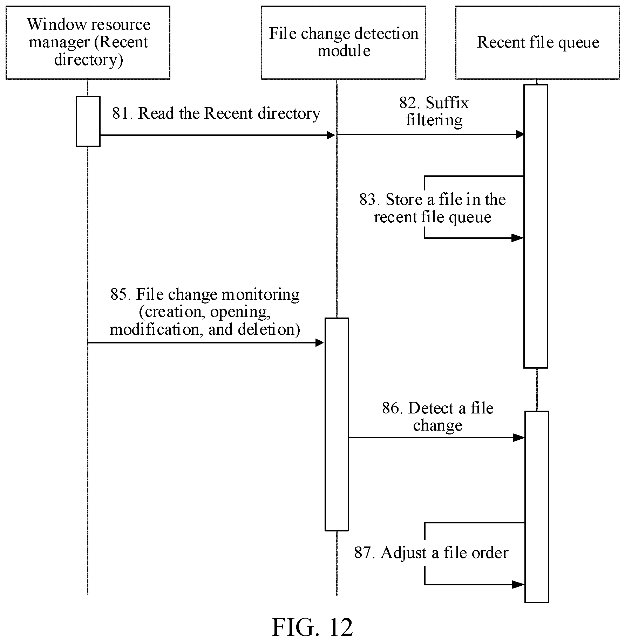

As used by users, the shortcuts in the Recent directory continue changing. The file change detection module further reads the shortcut change message corresponding to the recently used directory. The shortcut change message includes: at least one of a shortcut addition message, a shortcut modification message, a shortcut deletion message, and a shortcut renaming message, which are shown in step 85 in FIG. 12.

In step 602d: a shortcut in the shortcut change message is parsed to obtain second source file information. The recent file queue is updated according to a file corresponding to the second source file information.

The file change detection module further perform any of the following operations in the recent file queue based on the second source file information: adding a newly created previously used file, delete a deleted previously used file, modifying the file data of the previously used file, and modifying the use time of the previously used file.

In step 602e: the files in the recent file queue are determined as the previously used files on the first terminal.

Optionally, the file change detection module may further adjust (87) a file order of all of the previously used files in the recent file queue when there is a file change (86).

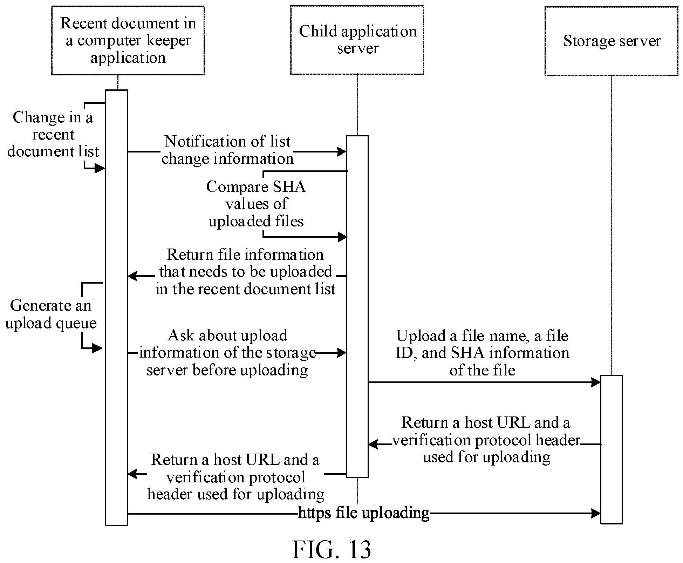

Optionally, as shown in FIG. 13, after detecting a change in the recent file queue, the computer keeper application first needs to transmit a first asking request to the sub-application server to learn files in the recent file queue that need to be uploaded (through incremental uploading). Optionally, the computer keeper application transmits a secure hash algorithm (SHA) of each file in the recent file queue to the sub-application server through the first asking request. The sub-application server compares the SHA in the asking request to a stored SHA. After comparison, to-be-uploaded-file information is transmitted to the computer keeper application through a network package. The to-be-uploaded-file information is used for notifying the computer keeper application of files that need to be uploaded, that is, files that need to be uploaded incrementally. After receiving the to-be-uploaded-file information, the computer keeper application forms a to-be-uploaded-file queue. The computer keeper application transmits a second asking request to the sub-application server. The second asking request is used for learning a storage location on the storage server at which a to-be-uploaded file is to be stored. The second asking request carries a file name, a file ID, and SHA information of the to-be-uploaded file. The sub-application server forwards the second asking request to the storage server, and the storage server returns, to the sub-application server, a host URL and a verification protocol header used for uploading. The sub-application server returns, to the computer keeper application, the host URL and the verification protocol header used for uploading, and the computer keeper application uploads the to-be-uploaded file to a specified storage location through the https communication protocol according to the host URL and the verification protocol header used for uploading, thereby completing the entire process of changed file uploading. The host URL and the verification protocol header may be referred to as upload information, and different upload protocols may have different upload information.

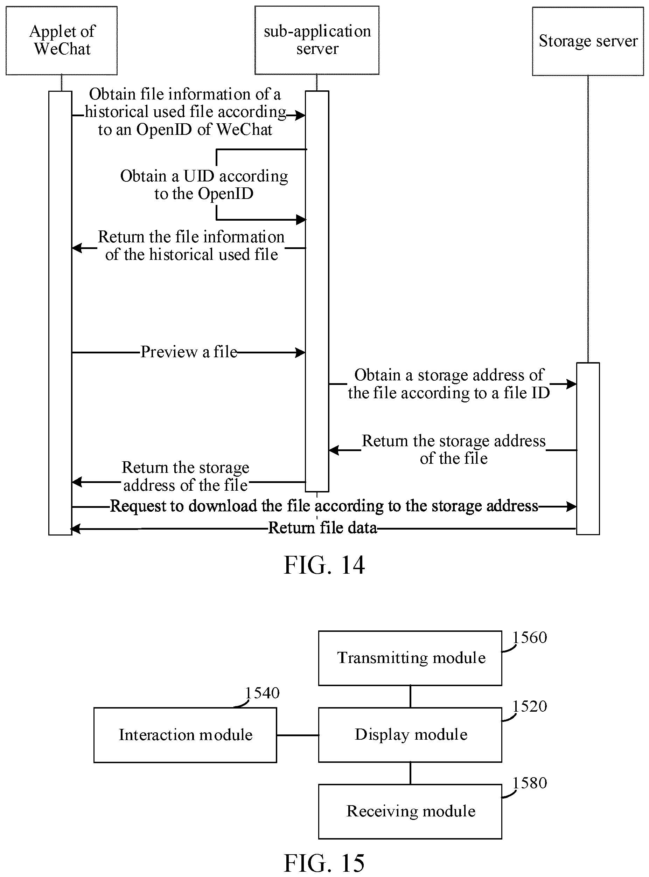

Optionally, as shown in FIG. 14, a mapping relationship between the computer keeper application and the background server is determined by using the GUID and the UID. A user may be uniquely identified by using a UID of the sub-application server. Mapping between the sub-application and the sub-application server is completed through an OpenID provided by an applet. In other words, an identification relationship among the three terminals is as follows: a GUID of a PC corresponds to a UID of the sub-application server, and the UID of the sub-application server corresponds to the OpenID of the sub-application, so that the sub-application may indirectly correspond to the PC through the UID. During obtaining of the previously used file by the sub-application, the sub-application may obtain a file list of the n previously used files from the sub-application server through the mapping relationship between the OpenID and the UID, or may ask the sub-application server about a storage address of the file through the file ID, and download a corresponding file from the storage server according to the storage address.

In summary, in the method provided in this embodiment, the Recent directory is detected through the file change detection module. When the previously used file changes, the recent file queue may be updated in real time, so that the previously used file can be uploaded to server storage space of the target account in time, thereby implementing synchronization among a plurality of terminals in time.

An apparatus embodiment of this application is described below. The apparatus embodiment and the method embodiment correspond to each other. Therefore, for details not described in the apparatus embodiment, reference may be made to the descriptions in the above method embodiment.

FIG. 15 is a structural block diagram of an apparatus for viewing a previously used file according to an embodiment of this application. The apparatus may be implemented as all or part of a terminal (the second terminal) through software, hardware, or a combination thereof. The apparatus includes: a display module 1520, an interaction module 1540, a transmitting module 1560, and a receiving module 1580.

The display module 1520 is configured to display a first user interface of a parent application, an entry to at least one sub-application being displayed on the first user interface, and the sub-application running by relying on the parent application.

The interaction module 1540 is configured to receive a start signal triggered at an entry to a target sub-application. The target sub-application is one of the at least one sub-application.

The transmitting module 1560 is configured to transmit an information obtaining request to a server corresponding to the target sub-application.

The receiving module 1580 is configured to receive file information of n previously used files transmitted by the server.

The display module 1520 is configured to display a second user interface of the target sub-application, the file information of the n previously used files being displayed on the second user interface.

The n previously used files are previously used by another terminal and uploaded by the another terminal to the server, and n is a positive integer.

In an optional embodiment, the transmitting module 1560 is configured to transmit, through the target sub-application, the information obtaining request to the server corresponding to the target sub-application, the information obtaining request carrying a first user account that is logged into the parent application. The receiving module 1580 is configured to receive file names of the n previously used files transmitted by the server, the file names being obtained by the server through query according to a second user account associated with the first user account, and the second user account corresponding to the another terminal.

In an optional embodiment, the display module 1520 is further configured to display a code scanning interface of the parent application. The transmitting module 1560 is further configured to: in a case that a preset type of a graphic code displayed on the another terminal is successfully scanned on the code scanning interface, transmit an account binding request to the server.

In an optional embodiment, the transmitting module 1560 is configured to: obtain a second user account in the graphic code, the second user account corresponding to the another terminal; obtain the first user account that is logged into the parent application; and transmit the account binding request to the server, the account binding request carrying the first user account and the second user account.

In an optional embodiment, the interaction module 1540 is configured to receive a viewing signal of file information of a target previously used file in the n previously used files. The receiving module 1580 is configured to download the target previously used file. The display module 1520 is further configured to display file content of the target previously used file.

In an optional embodiment, the transmitting module 1560 is configured to transmit a file download request to the server corresponding to the target sub-application, the file download request carrying a file identifier of the target previously used file. The receiving module 1580 is configured to: receive a storage address corresponding to the target previously used file that is in a file storage system and that is transmitted by the server; and download the target previously used file from the file storage system according to the storage address.

In an optional embodiment, the parent application is an instant messaging application, and the target sub-application is a recent document carrying application.

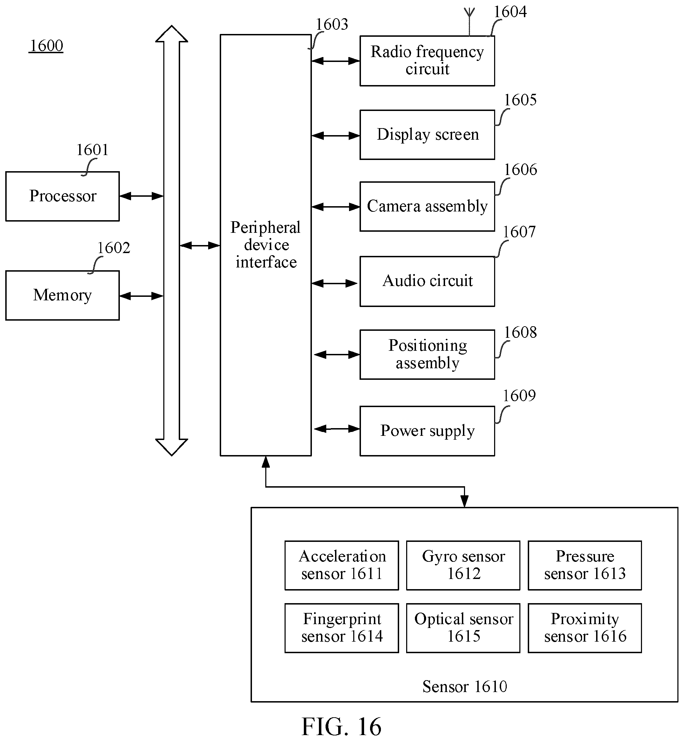

FIG. 16 is a structural block diagram of a terminal 1600 according to an exemplary embodiment of this application. The terminal 1600 may be: a smartphone, a tablet computer, a moving picture experts group audio layer III (MP3) player, a moving picture experts group audio layer IV (MP4) player, a notebook computer, or a desktop computer, etc. The terminal 1600 may also be referred to as user equipment, a portable terminal, a laptop terminal, or a desktop terminal, etc.

Generally, the terminal 1600 includes: a processor 1601 and a memory 1602.

The processor 1601 may include one or more processing cores, such as a 4-core processor, an 8-core processor, etc. The processor 1601 may be implemented by using at least one of the following hardware forms: digital signal processing (DSP), a field-programmable gate array (FPGA), a programmable logic array (PLA). The processor 1601 may also include a main processor and a coprocessor. The main processor is configured to process data in a wake-up state that is also referred to as a central processing unit (CPU). The coprocessor is configured to process data in a standby state with low power consumption. In some embodiments, the processor 1601 may be integrated with a graphics processing unit (GPU). The GPU is configured to render and draw content that needs to be displayed on a display screen. In some embodiments, the processor 1601 may further include an artificial intelligence (AI) processor. The AI processor is configured to process computing operations related to machine learning.

The memory 1602 may include one or more computer-readable storage media that may be non-transitory. The memory 1602 may further include a high-speed random access memory and a non-volatile memory, for example, one or more magnetic disk storage devices and flash memory storage devices. In some embodiments, the non-transitory computer-readable storage medium in the memory 1602 is configured to store at least one instruction to be executed by the processor 1601 to implement the method for viewing a previously used file provided in the method embodiment of this application.

In some embodiments, the terminal 1600 may optionally include: a peripheral device interface 1603 and at least one peripheral device. The processor 1601, the memory 1602, and the peripheral device interface 1603 may be connected through a bus or a signal line. Each peripheral device may be connected to the peripheral device interface 1603 through a bus, a signal line, or a circuit board. Specifically, the peripheral device includes: at least one of a radio frequency circuit 1604, a touch display screen 1605, a camera 1606, an audio circuit 1607, a positioning assembly 1608, and a power supply 1609.

The peripheral device interface 1603 may be configured to connect at least one peripheral device related to input/output (I/O) to the processor 1601 and the memory 1602. In some embodiments, the processor 1601, the memory 1602, and the peripheral device interface 1603 are integrated on the same chip or the same circuit board. In some other embodiments, any one or two of the processor 1601, the memory 1602, and the peripheral device interface 1603 may be implemented on an independent chip or circuit board. This is not limited in this embodiment.

The radio frequency circuit 1604 is configured to receive and transmit a radio frequency (RF) signal that is also referred to as an electromagnetic signal. The radio frequency circuit 1604 communicates with a communication network and other communication devices through the electromagnetic signal. The radio frequency circuit 1604 converts an electrical signal into an electromagnetic signal for transmission, or converts a received electromagnetic signal into an electrical signal. Optionally, the radio frequency circuit 1604 includes: an antenna system, an RF transceiver, one or more amplifiers, a tuner, an oscillator, a digital signal processor, a codec chipset, and a user identity module card, etc. The radio frequency circuit 1604 may communicate with another terminal through at least one wireless communication protocol. The wireless communication protocol includes but is not limited to: the World Wide Web, the metropolitan area network, the Intranet, various generations of mobile communication networks (2G, 3G, 4G, and 5G), a wireless local area network, and/or a Wireless Fidelity (Wi-Fi) network. In some embodiments, the radio frequency circuit 1604 may further include a near field communication (NFC)-related circuit. This is not limited in this application.

The display screen 1605 is configured to display a user interface (UI). The UI may include graphics, text, icons, videos, and any combination thereof. When the display screen 1605 is a touch display screen, the display screen 1605 further has an ability to collect touch signals on or above a surface of the display screen 1605. The touch signal may be input to the processor 1601 as a control signal for processing. In this case, the display screen 1605 may be further configured to provide a virtual button and or a virtual keyboard that are also referred to as soft buttons and/or soft keyboards. In some embodiments, there may be one display screen 1605 disposed on a front panel of the terminal 1600. In other embodiments, there may be at least two display screens 1605 that are respectively disposed on different surfaces of the terminal 1600 or may be folded. In still other embodiments, the display screen 1605 may be a flexible display screen disposed on a curved surface or a folding surface of the terminal 1600. The display screen 1605 may be even set as a non-rectangular irregular figure, that is, a special-shaped screen. The display screen 1605 may be made of materials such as a liquid crystal display (LCD) and an organic light-emitting diode (OLED).

The camera assembly 1606 is configured to collect images or videos. Optionally, the camera assembly 1606 includes a front camera and a rear camera. Generally, the front camera is disposed on the front panel of the terminal, and the rear camera is disposed on the back of the terminal. In some embodiments, there are at least two rear cameras, which are respectively any of a main camera, a depth-of-field camera, a wide-angle camera, and a telephoto camera, so as to achieve background blurring through fusion of the main camera and the depth-of-field camera, panoramic photographing and virtual reality (VR) photographing through fusion of the main camera and the wide-angle camera, or other fusion photographing functions. In some embodiments, the camera assembly 1606 may further include a flashlight. The flashlight may be a single-color-temperature flashlight or a dual-color-temperature flashlight. Dual-color-temperature flashlight is a combination of a warm flashlight and a cold flashlight that may be used for light compensation at different color temperatures.

The audio circuit 1607 may include a microphone and a speaker. The microphone is configured to collect sound waves of a user and an environment, and convert the sound waves into electrical signals and input the signals to the processor 1601 for processing, or input the signals to the radio frequency circuit 1604 to implement voice communication. For stereo collection or noise reduction, there may be a plurality of microphones that are respectively disposed at different parts of the terminal 1600. The microphone may also be an array microphone or an omnidirectional acquisition microphone. The speaker is configured to convert the electrical signal from the processor 1601 or the radio frequency circuit 1604 into sound waves. The speaker may be a traditional thin-film speaker or a piezoelectric ceramic speaker. When the speaker is a piezoelectric ceramic speaker, electrical signals can be converted into not only sound waves audible to human, but also sound waves inaudible to human for purposes such as ranging, etc. In some embodiments, the audio circuit 1607 may further include a headphone jack.

The positioning component 1608 is configured to determine a current geographical position of the terminal 1600 to implement navigation or a location based service (LBS). The positioning assembly 1608 may be based on the Global Positioning System (GPS) of the United States, China's Beidou Navigation Satellite System (BDS), or the Russia's Galileo System.

The power supply 1609 is configured to supply power to assemblies in the terminal 1600. The power supply 1609 may be an alternating current battery, a direct current battery, a disposable battery, or a rechargeable battery. When the power supply 1609 includes a rechargeable battery, the rechargeable battery may be a wired rechargeable battery or a wireless rechargeable battery. The wired rechargeable battery performs charging through a wired line, and the wireless rechargeable battery performs charging through a wireless coil. The rechargeable battery may also support a fast charging technology.

In some embodiments, the terminal 1600 further includes one or more sensors 1610. The one or more sensors 1610 include but are not limited to: an acceleration sensor 1611, a gyro sensor 1612, a pressure sensor 1613, a fingerprint sensor 1614, an optical sensor 1615, and a proximity sensor 1616.

The acceleration sensor 1611 may detect a magnitude of acceleration on three coordinate axes of a coordinate system established by using the terminal 1600. For example, the acceleration sensor 1611 may be configured to detect components of gravity acceleration on the three coordinate axes. The processor 1601 may control the touch display screen 1605 to display the user interface in a landscape view or a portrait view according to a gravity acceleration signal collected by the acceleration sensor 1611. The acceleration sensor 1611 may be further configured to collect data of a game or user movement.

The gyro sensor 1612 may detect a body direction and a rotation angle of the terminal 1600, and may cooperate with the acceleration sensor 1611 to collect a 3D action performed by a user on the terminal 1600. The processor 1601 may implement the following functions according to the data collected by the gyro sensor 1612: action sense (for example, changing the UI based on a tilt operation of the user), image stabilization during photographing, game control, and inertial navigation.

The pressure sensor 1613 may be disposed at a side frame of the terminal 1600 and/or a layer under the touch display screen 1605. When disposed at the side frame of the terminal 1600, the pressure sensor 1613 may detect a grip signal of the user on the terminal 1600, and the processor 1601 may perform left-right hand recognition or a shortcut operation according to the grip signal collected by the pressure sensor 1613. When the pressure sensor 1613 is disposed at the layer under the touch display screen 1605, the processor 1601 controls an operable control on the UI interface according to a pressure operation performed by the user on the touch display screen 1605. The operable control includes at least one of a button control, a scroll bar control, an icon control, and a menu control.

The fingerprint sensor 1614 is configured to collect a fingerprint of a user, and the processor 1601 identifies an identity of the user according to the fingerprint collected by the fingerprint sensor 1614, or the fingerprint sensor 1614 identifies the identity of the user based on the collected fingerprint. When the identity of the user is identified as credible, the processor 1601 authorizes the user to perform a related sensitive operation, including screen unlocking, viewing of encrypted information, software downloading, paying, and setting changing, etc. The fingerprint sensor 1614 may be disposed at the front, the back, or the side of the terminal 1600. When a physical button or a manufacturer logo is disposed on the terminal 1600, the fingerprint sensor 1614 may be integrated with the physical button or the manufacturer logo.

The optical sensor 1615 is configured to collect ambient light intensity. In an embodiment, the processor 1601 may control a display brightness of the touch display 1605 according to the ambient light intensity collected by the optical sensor 1615. Specifically, when the ambient light intensity is relatively high, the display brightness of the touch display 1605 is increased. When the ambient light intensity is relatively low, the display brightness of the touch display 1605 is reduced. In another embodiment, the processor 1601 may further dynamically adjust a photographing parameter of the camera assembly 1606 according to the ambient light intensity collected by the optical sensor 1615.

The proximity sensor 1616, also referred to as a distance sensor, is usually disposed on the front panel of the terminal 1600. The proximity sensor 1616 is configured to collect a distance between the user and the front of the terminal 1600. In an embodiment, when the proximity sensor 1616 detects that the distance between the user and the front of the terminal 1600 is gradually smaller, the processor 1601 controls the touch display 1605 to switch from a screen-on state to a screen-off state. When the proximity sensor 1616 detects that the distance between the user and the front of the terminal 1600 is gradually larger, the processor 1601 controls the touch display 1605 to switch from the screen-off state to the screen-on state.

A person skilled in the art may understand that the structure shown in FIG. 16 does not constitute a limitation on the terminal 1600, and may include more or fewer assemblies than illustrated, or combine some assemblies, or adopt different assembly arrangements.

This application further provides a computer readable storage medium, the storage medium storing at least one instruction, at least one program, and a code set or an instruction set, and the at least one instruction, the at least one program, and the code set or the instruction set being loaded and executed by the processor to implement the method for viewing a previously used file provided in the foregoing method embodiments.

Optionally, this application further provides a computer program product including an instruction. When the computer program product runs on a computer, the computer is caused to perform the method for viewing a previously used file according to the foregoing aspects.

The sequence numbers of the foregoing embodiments of this application are merely for description purpose and do not indicate the preference of the embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of this application, but are not intended to limit this application. Any modification, equivalent replacement, or improvement made within the spirit and principle of this application shall fall within the protection scope of this application.

## Claims

1. A method for viewing a previously used file, applied to a second terminal, the method comprising:
displaying a first user interface of a parent application, an entry to at least one sub-application being displayed on the first user interface, and the sub-application running by relying on the parent application;
receiving a start signal triggered at an entry to a target sub-application, the target sub-application being one of the at least one sub-application;
transmitting an information obtaining request to a server corresponding to the target sub-application;
receiving file information of n previously used files from the server; and
displaying a second user interface of the target sub-application, the file information of the n previously used files being displayed on the second user interface,
wherein the n previously used files are previously used by another terminal and uploaded by the another terminal to the server, and n is a positive integer.

2. The method according to claim 1, wherein the transmitting the information obtaining request to the server corresponding to the target sub-application comprises:
transmitting, via the target sub-application, the information obtaining request to the server corresponding to the target sub-application, the information obtaining request carrying a first user account that is logged into the parent application; and
wherein the receiving the file information of the n previously used files from the server comprises:
receiving file names of the n previously used files from the server, the file names being obtained by the server through a query according to a second user account associated with the first user account, and the second user account corresponding to the another terminal.

3. The method according to claim 1, further comprising:
before the displaying the first user interface of the parent application,
displaying a code scanning interface of the parent application; and
in a case that a preset type of graphic code displayed on the another terminal is successfully scanned on the code scanning interface, transmitting an account binding request to the server.

4. The method according to claim 3, wherein the transmitting the account binding request to the server comprises:
acquiring a second user account from the graphic code, the second user account corresponding to the another terminal;
obtaining the first user account that is logged into the parent application; and
transmitting the account binding request to the server, the account binding request carrying the first user account and the second user account.

5. The method according to any one of claims 1 to 4, further comprising:
after the displaying the second user interface of the target sub-application,
receiving a viewing signal of a target previously used file in the n previously used files;
downloading the target previously used file; and
displaying file content of the target previously used file.

6. The method according to claim 5, wherein the downloading the target previously used file comprises:
transmitting a file download request to the server corresponding to the target sub-application, the file download request carrying a file identifier of the target previously used file;
receiving a storage address corresponding to the target previously used file in a file storage system from the server; and
downloading the target previously used file from the file storage system based on the storage address.

7. The method according to any one of claims 1 to 4, wherein
the parent application is an instant messaging application, and
the target sub-application is a recently used document application.

8. An apparatus for viewing a previously used file, implemented in a second terminal, the apparatus comprising:
a display module, configured to display a first user interface of a parent application, an entry to at least one sub-application being displayed on the first user interface, and the sub-application running by relying on the parent application;
an interaction module, configured to receive a start signal triggered at an entry to a target sub-application, the target sub-application being one of the at least one sub-application;
a transmitting module, configured to transmit an information obtaining request to a server corresponding to the target sub-application; and
a receiving module, configured to receive file information of n previously used files from the server;
wherein the display module is further configured to display a second user interface of the target sub-application, the file information of the n previously used files being displayed on the second user interface; and
wherein the n previously used files being previously used by another terminal and uploaded by the another terminal to the server, and n is a positive integer.

9. The apparatus according to claim 8, wherein
the transmitting module is configured to transmit, via the target sub-application, the information obtaining request to the server corresponding to the target sub-application, the information obtaining request carrying a first user account that is logged into the parent application; and
the receiving module is configured to receive file names of the n previously used files from the server, the file names being obtained by the server through a query according to a second user account associated with the first user account, and the second user account corresponding to the another terminal.

10. The apparatus according to claim 8, wherein
the display module is further configured to display a code scanning interface of the parent application; and
the transmitting module is further configured to: in a case that a preset type of graphic code displayed on the another terminal is successfully scanned on the code scanning interface, transmit an account binding request to the server.

11. The apparatus according to claim 10, wherein the transmitting module is configured to:
acquire a second user account from the graphic code, the second user account corresponding to the another terminal;
obtain the first user account that is logged into the parent application; and
transmit the account binding request to the server, the account binding request carrying the first user account and the second user account.

12. The apparatus according to any one of claims 8 to 11, wherein
the receiving module is configured to: receive a viewing signal of a target previously used file in the n previously used files; and download the target previously used file; and
the display module is configured to display file content of the target previously used file.

13. The apparatus according to claim 12, wherein
the transmitting module is configured to transmit a file download request to the server corresponding to the target sub-application, the file download request carrying a file identifier of the target previously used file; and
the receiving module is configured to: receive a storage address corresponding to the target previously used file in a file storage system from the server; and download the target previously used file from the file storage system based on the storage address.

14. The apparatus according to any one of claims 8 to 11, wherein
the parent application is an instant messaging application, and
the target sub-application is a recently used document application.

15. A terminal, comprising:
a processor; and
a memory, storing at least one instruction, at least one program, a code set, or an instruction set, which, when loaded and executed by the processor, causes the processor to perform the method for viewing a previously used file according to any one of claims 1 to 7.

16. A computer readable storage medium having stored therein at least one instruction, at least one program, a code set, or an instruction set which, when loaded and executed by a processor, causes the processor to perform the method for viewing a previously used file according to any one of claims 1 to 7.
